# EUROPEAN PATENT APPLICATION

(11) **EP 4 420 743 A1**
(43) Date of publication of application: **28.08.2024**
(21) Application number: 24158834.2
(22) Date of filing: 21.02.2024
(51) Int. Cl.: A63B 22/00, A63B 22/06

(54) **EXERCISE EQUIPMENT WITH PIVOT DEVICE**

(30) Priority: 27.02.2023 US 202363448525 P; 05.02.2024 US 202418432585
(71) Applicant: Life Fitness, LLC, Franklin Park, IL 60131 (US)
(72) Inventor: Rogus, John M., Northbrook, 60062 (US)
(74) Representative: Håmsø Patentbyrå AS

(57) **Abstract**

There is disclosed exercise equipment for performing a striding exercise motion, the exercise equipment comprising:
a frame,
a rocker arm which is pivotably coupled to the frame,
a pedal member which pivots with the rocker arm relative to the frame, and
a pivot device which pivotably couples the pedal member to the rocker arm,
wherein the pivot device comprises a dampener configured to dampen pivoting movement of the pedal member relative to the rocker arm.

## Description

### CROSS-REFERENCE TO RELATED APPLICATION

The present application claims priority of U.S. Provisional Patent Application No. 63/448,525, filed February 27 2023, and U.S patent application 18/432,585 filed February 5, 2024.

### FIELD

The present disclosure relates to exercise equipment, and particularly to pivot devices for exercise equipment, and to exercise equipment having a pivot device with a resilient dampener.

### BACKGROUND

Relevant background information can be found in the following U.S. Patents and Publication:
U.S. Pat. Pub. No. 2021/0275866 discloses an exercise machine for performing a striding exercise motion. The exercise machine has a frame; first and second pedal members; first and second foot pads on the first and second pedal members, respectively, each of the first and second foot pads being movable along an elliptical path during said striding exercise motion; and first and second rocker arms each having a first end which is pivotable with respect to the frame about a rocker arm pivot axis and further having a second end which is pivotable with respect to one of the first and second pedal members about a pedal lever hub axis. The frame has first and second frame portions. The first frame portion supports the first and second rocker arms and is pivotable about a frame pivot axis relative to the second frame portion. Pivoting the first frame portion relative to the second frame portion adjusts a position of the rocker arm pivot axis, which thereby changes a shape of the elliptical path.

U.S. Pat. No. 10,946,238 discloses an exercise machine for performing a striding exercise motion. The machine has frame; first and second pedal members; first and second foot pads on the first and second pedal members, respectively, each of the first and second foot pads being configured to move in an elliptical path during the striding exercise motion; first and second rocker arms pivotably coupled to the frame; and first and second adjustment devices configured to actively adjust and set a position of the first and second pedal members relative to the first and second rocker arms, respectively, which thereby changes a shape of the elliptical path.

See also U.S. Pat. Nos. 10,478,665; 9,925,412; 9,283,425; 9,138,614; 9,126,078; 8,272,997; 7,931,566; 7,918,766; 6,846,272; 6,217,486; 6,203,474; 6,099,439; and 5,947,872.

### SUMMARY

This Summary is provided to introduce a selection of concepts which are further described below in the Detailed Description. This Summary is not intended to identify key or essential features of the claimed subject matter, nor is it intended to be used as an aid in limiting the scope of the claimed subject matter.

In non-limiting examples disclosed herein, exercise equipment is provided for performing a striding exercise motion. The exercise equipment may have a frame, a rocker arm which is pivotably coupled to the frame, a pedal member which pivots with the rocker arm relative to the frame, and a pivot device which pivotably couples the pedal member to the rocker arm. The pivot device may have a dampener configured to dampen pivoting movement of the pedal member relative to the rocker arm. The pedal member may be pivotable relative to the rocker arm through a pivot range. The dampener may comprise a resilient bumper which dampens said pivoting movement at a first end of said pivot range. The resilient bumper may have an annular shape which is compressed when the pedal member is pivoted towards the first end of said pivot range. The resilient bumper may have another shape.

In non-limiting examples disclosed herein, the resilient bumper may be coupled to a first one of the rocker arm and the pedal member, and a second one of the rocker arm and the pedal member may engage the resilient bumper when the pedal member is pivoted towards the first end of said pivot range. The second one of the rocker arm and the pedal member may comprise an engagement surface which engages the resilient bumper as the pedal member is pivoted towards the first end of said pivot range. The resilient bumper may be coupled to a supporting surface on the first one of the rocker arm and the pedal member The resilient bumper may have an annular shape which is compressed relative to the supporting surface when the pedal member is pivoted towards the first end of said pivot range.

In non-limiting examples disclosed herein, the second one of the rocker arm and the pedal member may comprises an engagement surface which engages the resilient bumper and compresses the annular shape when the pedal member is pivoted towards the first end of said pivot range. The engagement surface may be brought into a position which is substantially parallel to the supporting surface when the pedal member is pivoted to the first end of said pivot range. The engagement surface may be brought into a position which is not substantially parallel to the supporting surface.

In non-limiting examples disclosed herein, the resilient bumper is a first resilient bumper. A second resilient bumper is engaged at a second end of said pivot range. The pivot device may define a pivot axis about which the pedal member is pivotable relative to the rocker arm. The first resilient bumper and the second resilient bumper are diametrically opposed relative to the pivot axis.

In non-limiting examples disclosed herein, a pivot device is for exercise equipment. The pivot device comprises a first hub for a first movable member of the exercise equipment, and a second hub for a second movable member of the exercise equipment. The first hub and the second hub are pivotable relative to each other about a pivot axis through a pivot range, thereby facilitating pivoting movement of the first movable member and second movable member relative to each other about the pivot axis through the pivot range. A dampener is configured to dampen said pivoting movement, wherein the dampener comprises a resilient bumper which dampens said pivoting movement at a first end of said pivot range. The resilient bumper may have an annular shape which is compressed when the pedal member is pivoted towards the first end of said pivot range.

### BRIEF DESCRIPTION OF THE DRAWINGS

The present disclosure is described with reference to the following Figures. The same numbers are used throughout the Figures to reference like features and like components. Unless otherwise specifically noted, articles illustrated in the drawings are not necessarily drawn to scale.
FIG. 1 is a side perspective view of a first non-limiting example of an exercise machine according to the present disclosure, having certain features removed such as support column, base member and stabilizer covers.
FIG. 2 is a rear view thereof having a front stabilizer covers removed.
FIG. 3 is a side view thereof having front and rear covers and stabilizer covers removed.
FIG. 4 is an opposite side view thereof having front and rear covers and stabilizer covers removed.
FIG. 5 is a top view thereof having base member and stabilizer covers removed.
FIG. 6 is an exploded view of portions of the front of the machine.
FIG. 7 is another exploded view of the portions illustrated in FIG. 6.
FIG. 8 is a schematic view showing a low incline elliptical path of travel of foot pads on the machine.
FIG. 9 is a schematic view showing a medium incline elliptical path of travel of foot pads on the machine.
FIG. 10 is a schematic view showing a high incline elliptical path of travel of foot pads on the machine.
FIG. 11 is a perspective view of a first embodiment of a pivot joint which couples the rocker arm and pedal lever.
FIG. 12 is an exploded view of the pivot joint, taken from a first perspective.
FIG. 13 is an exploded view of the pivot joint, taken from an opposite, second perspective.
FIG. 14 is a sectional view showing the pivot joint in a disengaged position.
FIG. 15 is a sectional view showing the pivot joint in an initial dampening position.
FIG. 16 is a sectional view showing the pivot joint in a further dampening position.
FIG. 17 is a second embodiment of the pivot joint.
FIG. 18 is an exploded view of the second embodiment.
FIG. 19 is a third embodiment of the pivot joint.
FIG. 20 is an exploded view of the third embodiment.
FIG. 21 is an exploded view of a fourth embodiment of the pivot joint.
FIG. 22 is an exploded view of a fifth embodiment of the pivot joint.
FIG. 23 is a perspective view of a second embodiment of a dampener configured for use in a pivot joint.
FIG. 24 is a perspective view of a third embodiment of a dampener configured for use in a pivot joint.
FIG. 25 is a perspective view of a fourth embodiment of a dampener configured for use in a pivot joint.

### DETAILED DESCRIPTION OF THE DRAWINGS

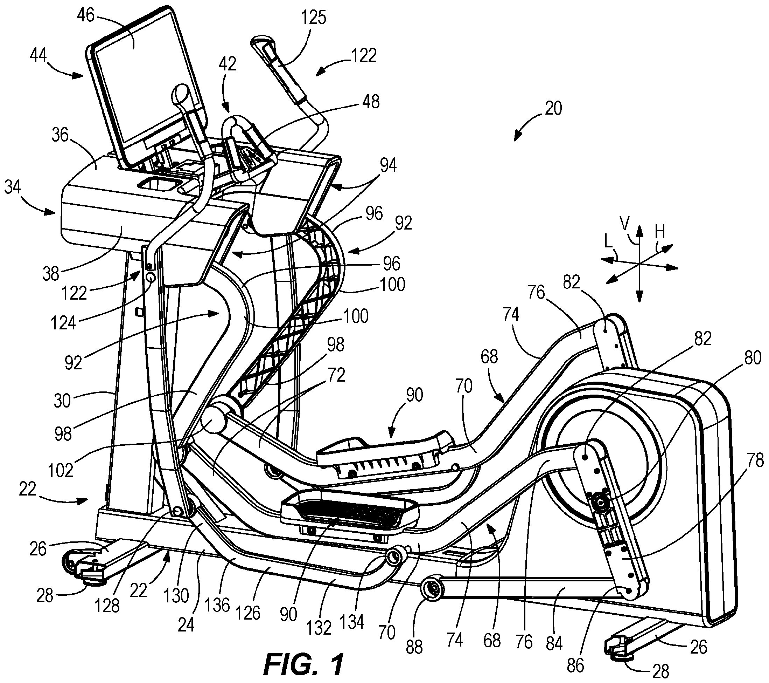

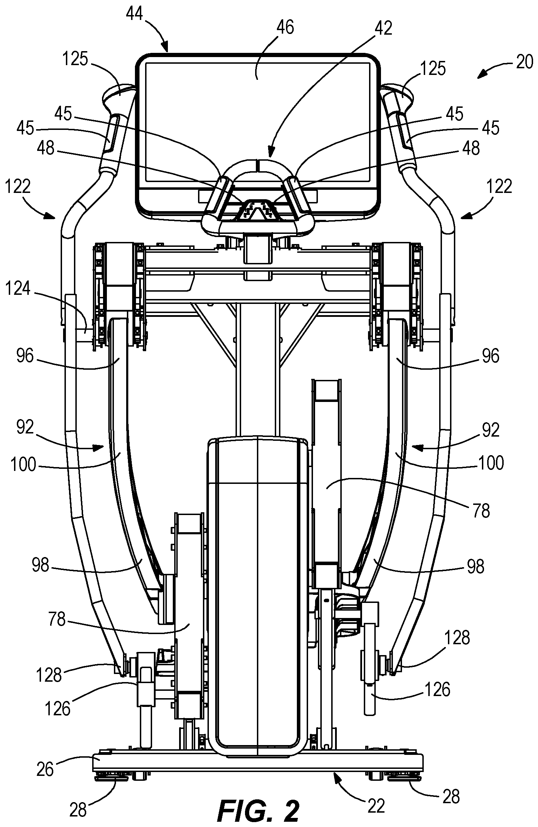

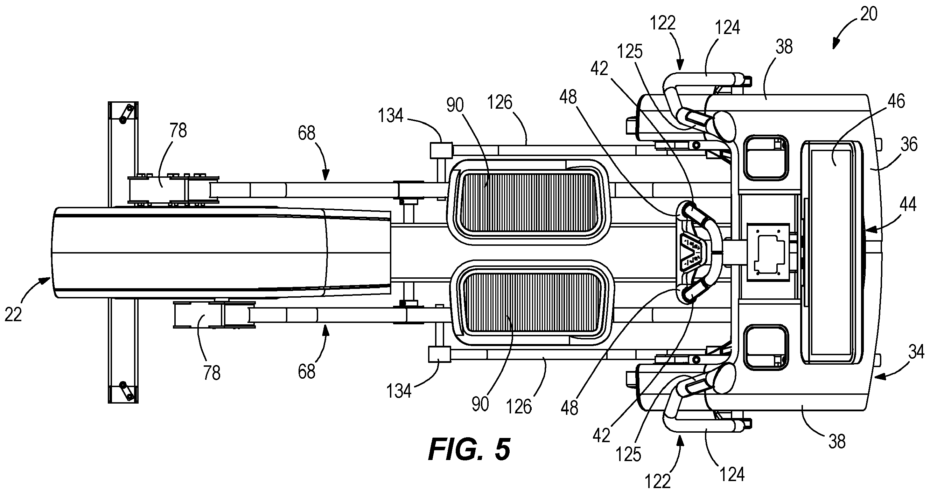

FIGS. 1-5 illustrate personal exercise machine 20 for performing a striding exercise motion. The machine 20 extends from front to back in a longitudinal direction L, from top to bottom in a vertical direction V, and from side to opposite side in a horizontal direction H. The machine 20 is substantially symmetrical in the horizontal direction H, so that the components on one side of the machine 20 are the same as or are mirror images of the components on the opposite side of the machine 20. As such, the descriptions provided below regarding components on one side of the machine 20 equally apply to the components on the opposite side of the machine 20.

The machine 20 has a frame 22 including a longitudinally extending base member 24. Horizontally extending stabilizer members 26 extend from the front and rear of the base member 24 and prevent the machine 20 from tipping over in the horizontal direction H. Each stabilizer member 26 has feet 28 for supporting the frame 22 above the ground. The frame 22 has a forward support column 30 which extends vertically upwardly from the front of the base member 24. An angular gusset 32 braces and supports the forward support column 30 relative to the base member 24. A bridge 34 is mounted on top of the forward support column 30. The bridge 34 has a horizontally extending body 36 with opposing first and second arms 38 extending rearwardly therefrom. As such, the bridge 34 generally has a U-shape and defines an "activity zone" between the arms 38 for the user's body and/or arms during performance of the striding exercise motion. A generally trapezoidal-shaped stationary handlebar 42 is rigidly mounted on the body 36 between the arms 38 and is at least partially for manually grasping by a user operating the machine 20.

A user console 44 is mounted to and extends generally upwardly from the bridge 34. The console 44 includes a display screen 46 oriented towards the user operating the machine 20. As conventional, the console 44 can include a processor and memory and be configured for controlling various devices associated with the machine 20, including for control of resistance and/or incline as for example will be further described herein below. The display screen 46 optionally can be a touch screen wherein the user operating the machine 20 can manually touch the screen to input commands to the console 44 for controlling the machine 20. Optionally, input buttons 48 are located on the stationary handlebar 42 and are for manually inputting commands to the console 44. In some examples, the input buttons 48 are located elsewhere such as on the upper ends of handgrips 125, described herein below. Input commands entered via the display screen 46 and/or the input buttons 48 can for example include an increase or decrease in resistance of the machine 20 and/or increase or decrease in incline of the machine 20, and/or the like. Optionally, biomechanical sensors 45 can be provided on the stationary handlebar 42 and/or on handgrips 125 to sense a heart rate of the user when the user manually grasps the handlebar 42 and/or the hand grips 125.

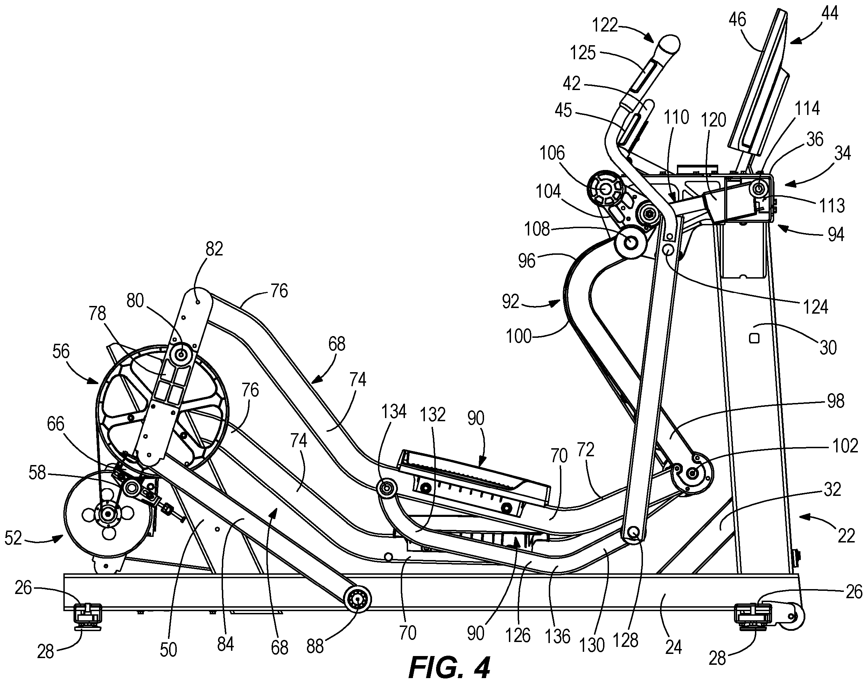

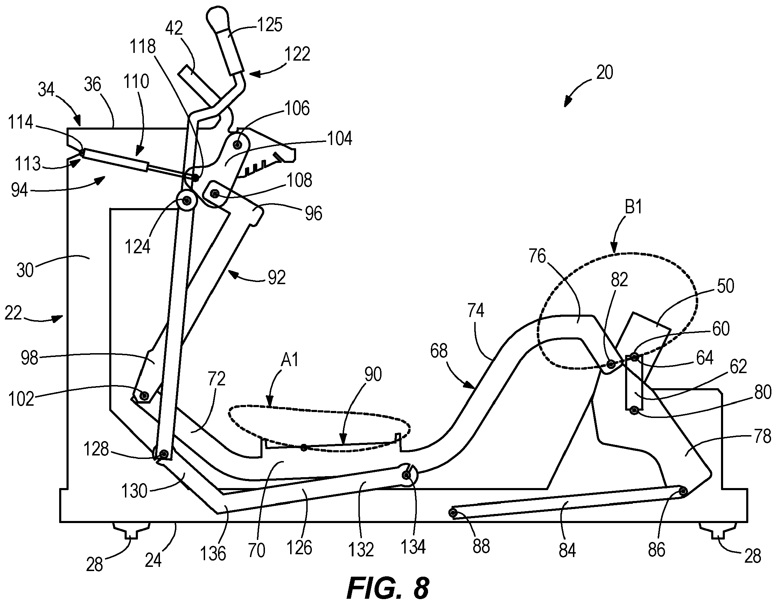

At the rear of the machine 20, the frame 22 further includes a rear support column 50 which extends angularly upwardly and rearwardly from the rear of the base member 24. A resistance mechanism 52 is mounted to the rear support column 50, including for example via a rear frame plate (not illustrated in FIG. 4) mounted to the rear support column 50 and/or the base member 24. The type and configuration of the resistance mechanism 52 is conventional and can vary from what is illustrated and described. In the illustrated example the resistance mechanism 52 is a hybrid generator-brake configured to provide a resistance to a striding motion performed on the machine 20, as will be further described herein below, and also configured to generate power based upon the striding motion, for example to power the console 44. In some examples, a suitable resistance mechanism is the "FB Six Series" sold by Chi Hua. The resistance mechanism 52 is connected to a pulley wheel 56 by a belt 58 and is configured so that rotation of the pulley wheel 56 rotates the resistance mechanism 52. The pulley wheel 56 is connected to the rear support column 50 by a center shaft 60 (see FIG. 8). The pulley wheel 56 and center shaft 60 are fixed relative to each other such that these components rotate together.

At the rear of the machine 20, radially opposed crank arms 62 have radially inner ends keyed to (fixed to) the center shaft 60 so that the crank arms 62 remain radially opposed to each other (i.e., 180 degrees apart) and so that rotation of the crank arms 62 and center shaft 60 causes rotation of the pulley wheel 56 about a pulley wheel pivot axis 64 defined by the center shaft 60. In the illustrated examples of FIGS. 1-5, the resistance mechanism resists rotation of the pulley wheel 56 via an electro-magnet 66 In some examples, the resistance mechanism 52 includes another means for resisting movement of the pulley wheel 56, such as via a flywheel, mechanical brake, pneumatic actuators, etc.

The machine 20 further has first and second pedal members 68 centrally located on opposite sides of the frame 22. The pedal members 68 are elongated in the longitudinal direction L, each having a central portion 70, a front portion 72 which extends generally forwardly and upwardly from the central portion 70, and a rear portion 74 which extends generally rearwardly and upwardly from the central portion 70 to a tail portion 76 which extends rearwardly from the rear portion 74 and substantially parallel to the central portion 70. In some examples, the tail portion 76 is not substantially parallel to the central portion 70.

At the rear of the machine 20, first and second elongated stride links 78 are freely rotatably (pivotably) coupled to the radially outer ends of the opposed crank arms 62, by for example bearings, at a stride link-crank arm pivot axis 80. Each stride link 78 has a first end which is pivotably coupled to a respective tail portion 76 of a pedal member 68 at a stride link-pedal member pivot axis 82. Each stride link 78 has an opposite, second end which is pivotably coupled to a distal or rear end of an elongated idler link 84 at a stride link-idler link pivot axis 86. The opposite, proximal or front end of the idler link 84 is pivotably coupled to the base member 24 at an idler link-base member pivot axis 88. As illustrated in at least FIGS. 1, 3 and 4, the stride link-crank arm pivot axis 80 is located along the stride link 78 between the stride link-pedal member pivot axis 82 and stride link-idler link pivot axis 86. In some examples, the stride link-crank arm pivot axis 80 is closer to the stride link-pedal member pivot axis 82 than the stride link-idler link pivot axis 86. In other examples, the pivot axis 80 is at the center of the stride link 78 or closer to the pivot axis 86.

First and second foot pads 90 are supported on the central portions 70 of the first and second pedal members 68. The exercise machine 20 includes the first and second foot pads 90 to support the user's feet during performance of the elliptical striding motion. The first and second foot pads 90 travel along an elliptical path which is incline adjustable, as will be further described herein below.

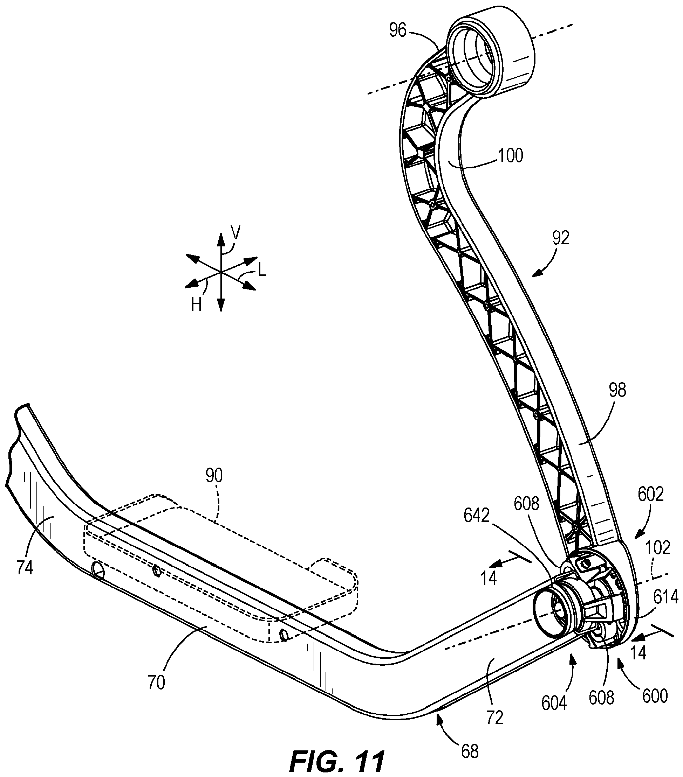

The machine 20 further has first and second rocker arms 92 which are pivotably coupled to the frame 22 by an adjustment device 94, which will be further described herein below. The type and configuration of the adjustment device 94 can vary. The rocker arms 92 have an upper end portion 96, a lower end portion 98, and an elbow portion 100 located between the upper end portion 96 and the lower end portion 98 so that the upper end portion 96 and lower end portion 98 extend at an angle relative to each other. The lower end portions 98 are pivotably coupled to the front portion 72 of the pedal members 68 at a rocker arm-pedal member pivot axis 102 so that the pedal members 68 are pivotably movable relative to the rocker arms 92 and also so that pivoting of the rocker arms 92 relative to the frame 22 causes commensurate pivoting and/or translating of the pedal members 68 relative to the frame 22, i.e., so that these components pivot and/or translate together relative to the frame 22. As will be further described herein below with reference to FIGS. 11-16, embodiments of a novel pivot device 600 pivotably couple the pedal members 68 to the rocker arms 92.

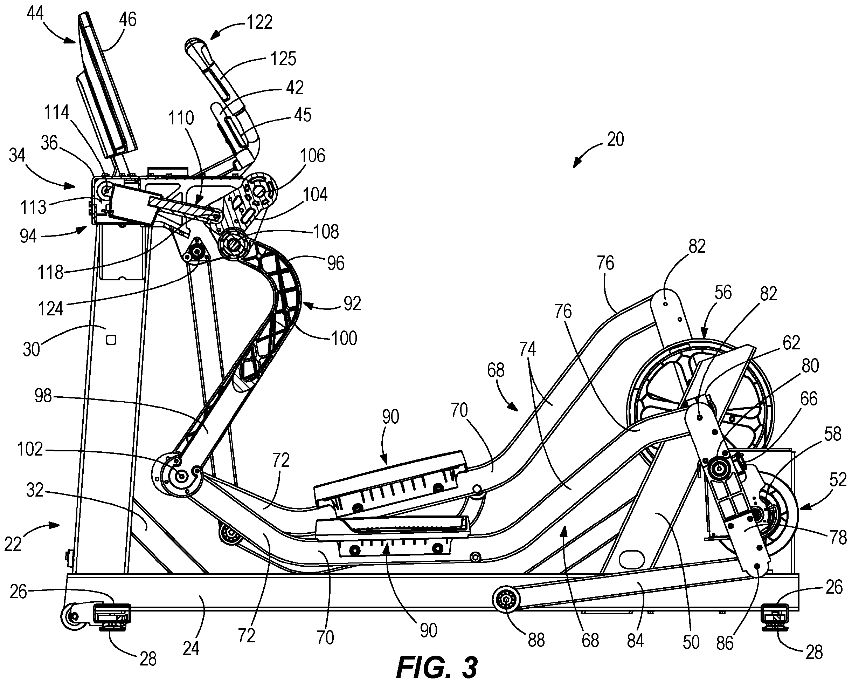

Referring to FIGS. 3, 4, 6 and 7, the adjustment device 94 is located in the bridge 34 and extends into the noted arms 38 on both sides of the activity zone. The adjustment device 94 is specially configured to facilitate selective adjustment and setting of a position of the rocker arms 92 relative to the frame 22, respectively, specifically the position of pivot axis 108, which thereby changes an incline shape of elliptical paths of travel of the foot pads 90, respectively, during the striding exercise motion, as will be further described herein below. The adjustment device 94 can be controlled by the noted controller based upon a stored exercise program or based upon an input by the operator to the console 44. For example this can be controlled via touch screen, input buttons 48 on the stationary handlebar 42 and/or input buttons on the upper ends of hand grips 125. As will be evident from the illustrated examples and the following description, the type and configuration of the adjustment device 94 can vary.

In the first example illustrated in FIGS. 1-10, the adjustment device 94 includes first and second incline links 104 which pivotably couple the upper portion 96 of the rocker arms 92 to the frame 22. More specifically, the incline links 104 have an upper portion which is pivotably coupled to the frame 22 at an incline link-frame pivot axis 106. The incline links 104 further have a lower portion which is pivotably coupled to the upper end portion 96 of the rocker arm 92 at an incline link-rocker arm pivot axis 108 which is located generally below the incline link-frame pivot axis 106. In some examples, bearings support the noted couplings so that the incline links 104 are pivotable relative to the noted axes 106, 108.

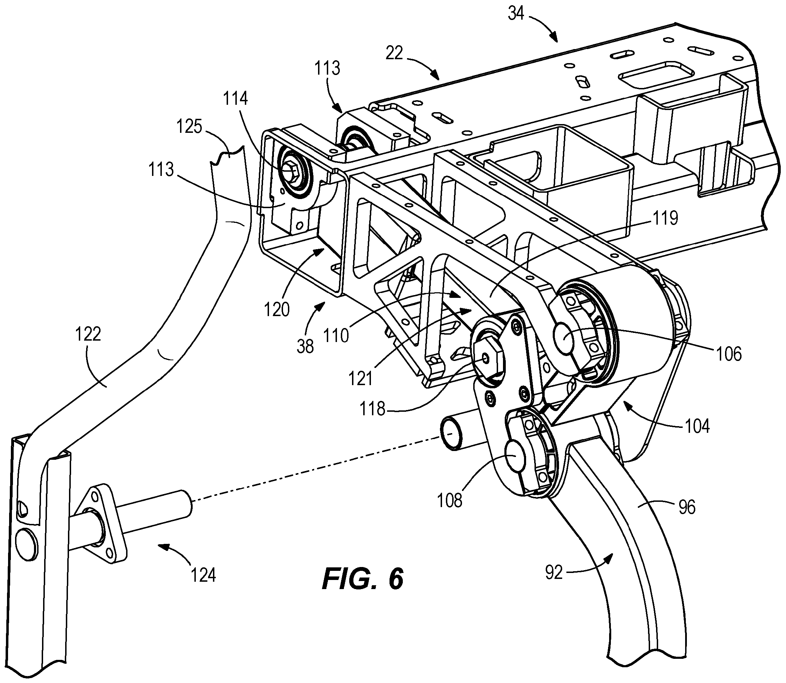

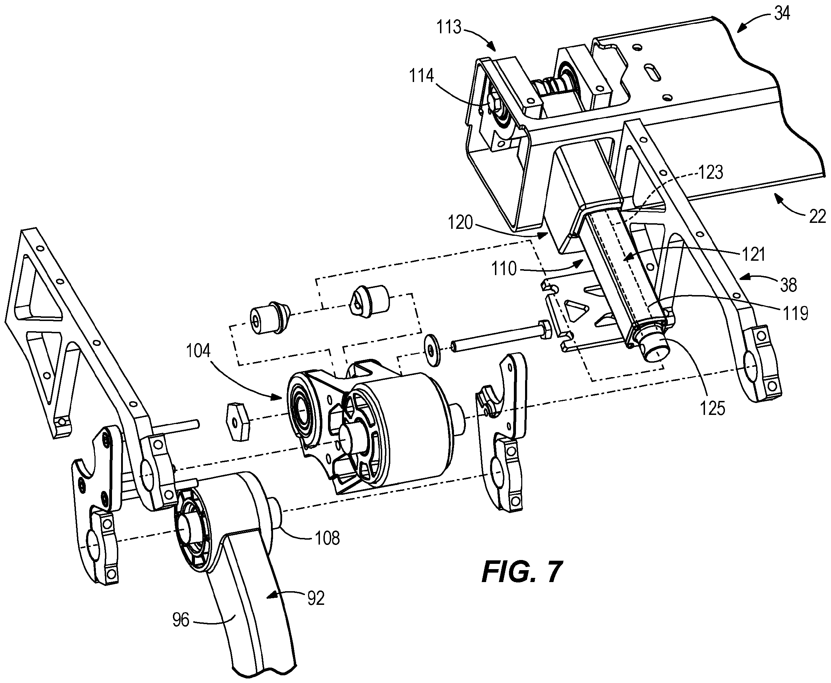

The adjustment device 94 is configured to pivot the first and second incline links 104 relative to the frame 22 (i.e., about the incline link-frame pivot axis 106) to thereby adjust and set the position of the rocker arms 92 relative to the frame 22, in particular to adjust and set the position of the incline link-rocker arm pivot axis 108 relative to the frame 22 (i.e., about the incline link-frame pivot axis 106). In the illustrated example, the adjustment device 94 includes first and second linear actuators 110. Note that the type of linear actuator 110 can vary from what is illustrated and described. In the illustrated example, the linear actuator 110 includes an electro-mechanical linear actuator, which has an electric gearmotor 120, a leadscrew assembly 121 and, a leadnut and tube assembly 125 (see FIGS. 6 and 7). The linear actuator 110 has a forward end pivotably coupled to the bridge 34 by a trunnion assembly 113, particularly at an actuator-bridge pivot axis 114. The linear actuator 110 has an opposite, rear end pivotably coupled to the incline link 104 at an actuator-incline link pivot axis 118 (see FIG. 6). An example bearing, which is best seen in exploded view in FIG. 7, supports the coupling at the actuator-incline link pivot axis 118. The actuator-incline link pivot axis 118 is offset relative to the incline link-frame pivot axis 106 and the incline link-rocker arm pivot axis 108. In the illustrated non-limiting example, the incline link 104 is a member or body having or defining a triangular shape wherein the incline link-frame pivot axis 106, the incline link-rocker arm pivot axis 108 and the actuator-incline link pivot axis 118 are located at the respective three apexes of the triangular shape.

The gearmotor 120, leadscrew assembly 121, and leadnut and tube assembly 125 are configured to lengthen or shorten the linear actuator 110 upon an input command from the noted controller, which can be based upon an operator input to the console 44 or based upon a program in the noted controller, as described herein above. Operation of the gearmotor 120 in a first direction rotates the lead screw 123 of the leadscrew assembly 121 in the first direction which causes the leadnut and tube assembly 125 to travel outwardly along the leadscrew 123 and outwardly relative to the housing 119 of linear actuator 110, thus lengthening the linear actuator 110. Operation of the gearmotor 120 in an opposite, second direction oppositely rotates the lead screw 123 in the second direction which cause the leadnut and tube assembly 125 to retract inwardly relative to the housing 119, thus shortening the linear actuator 110. Due to the relative locations of the incline link-frame pivot axis 106, incline link-rocker arm pivot axis 108, actuator-bridge pivot axis 114, and actuator-incline link pivot axis 118, extension of the linear actuator 110 pivots the incline link 104 rearwardly along an arc relative to the bridge 34 Such actuation of the linear actuator 110 also moves the incline link-rocker arm pivot axis 108 rearwardly (e.g., relative to the frame 22), and along an arc relative to the incline link-frame pivot axis 106. As illustrated and described herein below, this increases or raises the incline of the elliptical path of the foot pads 90 (e.g. relative to the frame 22). Conversely, shortening the linear actuator 110 pivots the incline link 104 forwardly along the arc relative to the bridge 34, along an arc relative to the incline link-frame pivot axis 106. This moves the incline link-rocker arm pivot axis 108 forwardly along the arc relative to the frame 22. As illustrated and described herein below, this reduces or lowers the incline of the elliptical path of the foot pads 90 (e.g., relative to the frame 22). In the examples disclosed herein, the adjustment device 94 can adjust the incline of the elliptical path of the foot pads 90 during the striding motion.

It is important to note that the adjustment device 94 does not need to include two actuators, as shown in the first example. In other examples, a single adjustment device connected to both of the incline links 104 is employed, via for example an electric motor, worm gears, pulleys, and/or any other conventional mechanism for causing the above-noted adjustment of the relative position of the axes.

Referring to FIGS. 1-5, the machine 20 has movable handle members 122 which are pivotably coupled to opposite sides of the bridge 34 at a handle member-bridge pivot axis 124. Each handle member 122 has an upper end with a hand grip 125 for manually grasping by the user performing the striding exercise motion. Each handle member 122 has a lower end which is pivotably coupled to a coupler link 126 at a handle member-coupler link pivot axis 128. Thus, the handle member 122 and respective coupler link 126 pivot together about the handle member-bridge pivot axis 124 and the coupler link 126 is pivotable relative to the handle member 122 about the handle member-coupler link pivot axis 128. Each coupler link 126 has a forward end portion 130 coupled to the handle member 122 at the handle member-coupler link pivot axis 128 and a rearward end portion 132 pivotably coupled to the central portion 70 of the pedal member 68 at a coupler link-pedal member pivot axis 134. Thus the coupler link 126 is pivotable relative to the pedal member 68 about the coupler link-pedal member pivot axis 134. An elbow portion 136 is located between the forward and rearward end portions 130, 132 so that the forward end portion 130 extends angularly upwardly relative to the rearward end portion 132. As such, the user standing on the foot pads 90 and manually grasping the hand grips 125 can alternately push and pull on the hand grips 125 to thereby apply pushing and pulling forces on the pedal members 68 via the coupler links 126, which assists the striding exercise motion, as will be further described herein below.

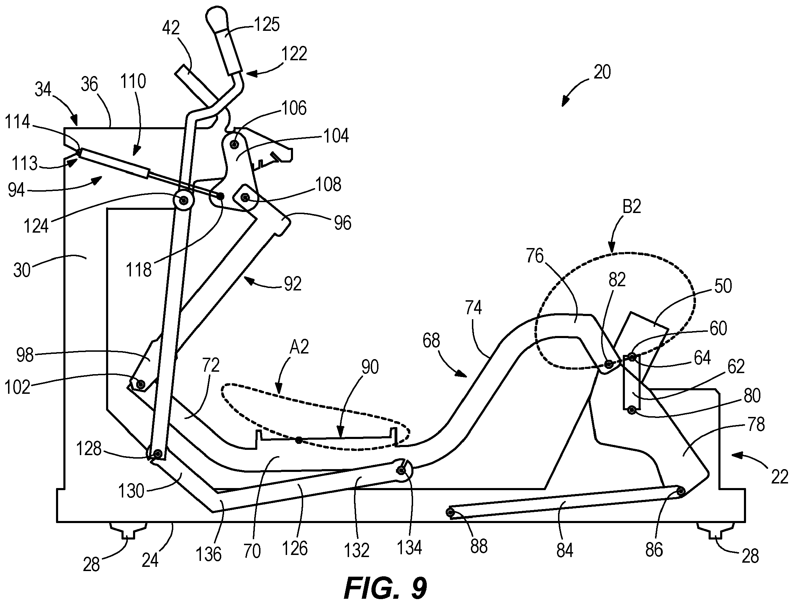

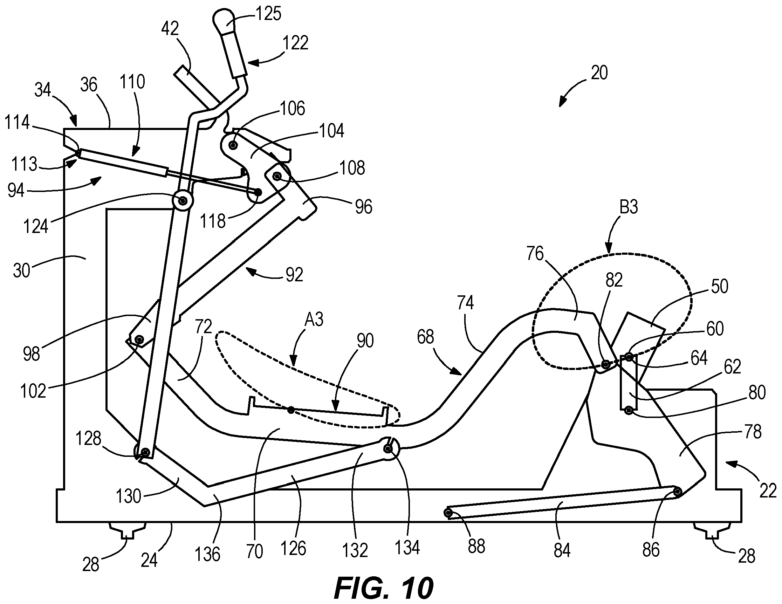

FIGS. 8-10 are schematic views of the machine 20 showing the paths of travel A1-A3 of the foot pads 90 and the paths of travel B1-B3 of the stride link-pedal member pivot axis 82 during low incline (FIG. 8), medium incline (FIG. 9), and high incline (FIG. 10). In each figure, the rocker arms 92 have a different position of swing range, which is determined by position of the adjustment device 94. FIG. 8 illustrates low-incline, where the linear actuators 110 are retracted and thus the incline links 104 are pivoted about the incline link-frame pivot axis 106 towards the bridge 34 (i.e., clockwise about the incline link-frame pivot axis 106 in the side view illustrated in FIG. 8). This moves the incline link-rocker arm pivot axis 108 along an arc towards the bridge 34 and via connection of the rocker arms 92 and pedal members 68, positions the foot pads 90 so as to follow the low-incline elliptical path of travel A1. FIG. 9 illustrates medium-incline, wherein the linear actuators 110 are moderately extended and thus the incline links 104 are pivoted about the incline link-frame pivot axis 106 away from the bridge 34 (i.e., counter-clockwise about the incline link-frame pivot axis 106 from the side view illustrated in FIG. 9). This moves the incline link-rocker arm pivot axis 108 along an arc away from the bridge 34 and via connection of the rocker arms 92 and pedal members 68, positions the foot pads 90 to follow the medium-incline elliptical path of travel A2. FIG. 10 illustrates a high-incline, wherein the linear actuators 110 are further extended and thus the incline links 104 are pivoted about the incline link-frame pivot axis 106 away from the bridge 34 (i.e., further counter-clockwise about the incline link-frame pivot axis 106 from the side view illustrated in FIG. 10). This moves the incline link-rocker arm pivot axis 108 along the arc further away from the bridge 34 and via connection of the rocker arms 92 and pedal members 68, positions the foot pads 90 to follow the high-incline elliptical path of travel A3. It is important to understand that the three positions illustrated in FIGS. 8-10 are exemplary and other positions are possible via operation of the adjustment device 94, which can be automatically controlled by programming of the console 44 and/or by inputs to the console 44 and/or input buttons 48 and/or other input buttons such as on the upper ends of handgrips 125.

By comparison of FIGS. 8-10, the machine 20 is advantageously configured to maintain a substantially compact and constant length (in the length direction L) of the paths of travel A1-A3 throughout the adjustments made by the adjustment device 94. The configurations of the various components advantageously take up a relatively small footprint. The ends of the rocker arms 92 advantageously do not swing beyond the front of the frame 22, thus maintaining a small footprint. The paths of travel B1-B3 are also substantially constant, due to the configuration of the stride link configuration illustrated and described herein above. The rear linkage including the stride links 78 advantageously does not swing beyond the rear portion of the frame 22, thus maintaining a small footprint. The configuration of the movable handle members 122 and the coupler link 126 is advantageous in that the overall path of movement (i.e., swing range of the handle members 122 about the handle member-bridge pivot axis 124) is substantially constant despite changes in incline via the adjustment device 94.

Advantageously, the foot pads 90 are located on the pedal members 68 at a distance rearward of the rocker arm-pedal member pivot axis 102 to create a more natural, vertical height of the paths of travel A1-A3. This feature in combination with the path of travel B1-B3 yields a more natural, and smooth path of travel A1-A3 in all incline settings. Also, the path of travel (arc) along which the incline link travels, as described herein above, is tilted upward towards the rear portion of travel, towards high incline. This tailors/blends some additional vertical height to the overall ellipse height as it adjusts to a high incline setting.

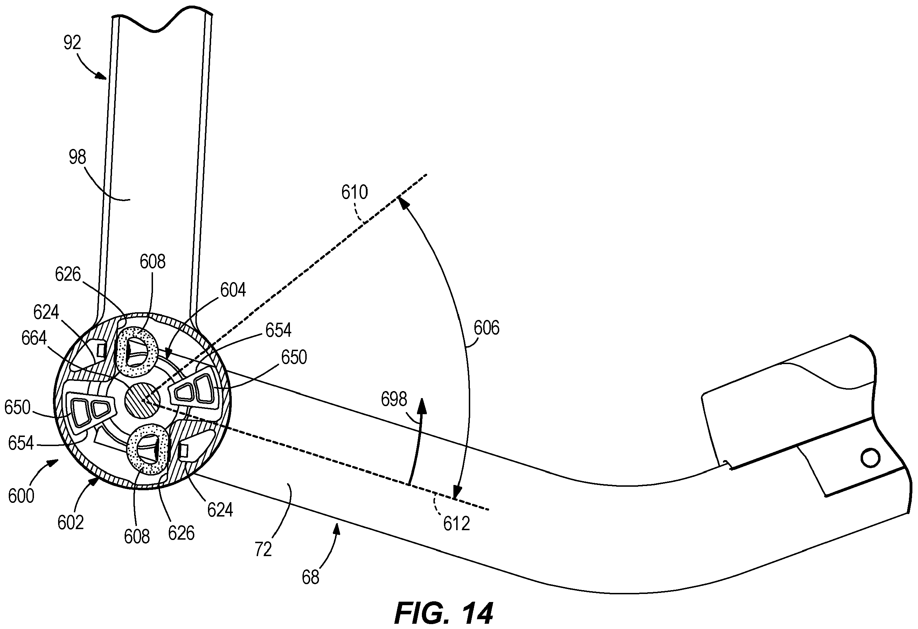

As previously mentioned, the lower end portions 98 of the rocker arms 92 are pivotably coupled to the front portion 72 of the pedal members 68 at a rocker arm-pedal member pivot axis 102 so that the pedal members 68 are pivotably movable relative to the rocker arms 92. Some embodiments of an exercise machine may be configured with a pivot device that couples the pedal members 68 to the rocker arms 92. For example, FIGS. 11-16 illustrate an embodiment of a novel pivot device 600 which pivotably couples the pedal members 68 to the rocker arms 92. The illustrated pivot device 600 includes a first hub 602 and a second hub 604 that are pivotable relative to each other about a pivot axis 102 defined by the pivot device 600 through an occlusion angle range (OAR) 606, which is the range of angular positions of the pedal member 68 relative to the rocker arms 92 (i.e., the pivot range or sweep range), as illustrated in FIGS. 14-16. Thus, the pedal member 68 and the rocker arm 92 may pivot relative to each other about the pivot axis 102 through the OAR 606. The illustrated pivot device 600 further includes a dampener 608 that is coupled to the rocker arm 92 or the pedal member 68 and configured to dampen pivoting movement of the pedal member 68 relative to the rocker arm 92. The pivot devices 600 are generally symmetrical in the horizontal direction H, so that the components of the pivot device 600 configured for use on one side of the machine 20 are the same as or are mirror images of the components configured for use on the opposite side of the machine 20. As such, the descriptions provided below regarding the pivot device 600 on one side of the machine 20 equally apply to the pivot device 600 on the opposite side of the machine 20. This may be useful, for example, to reduce the number of unique parts required for the pivot device 600 and the exercise machine 20 and to simplify the manufacturing and assembly processes.

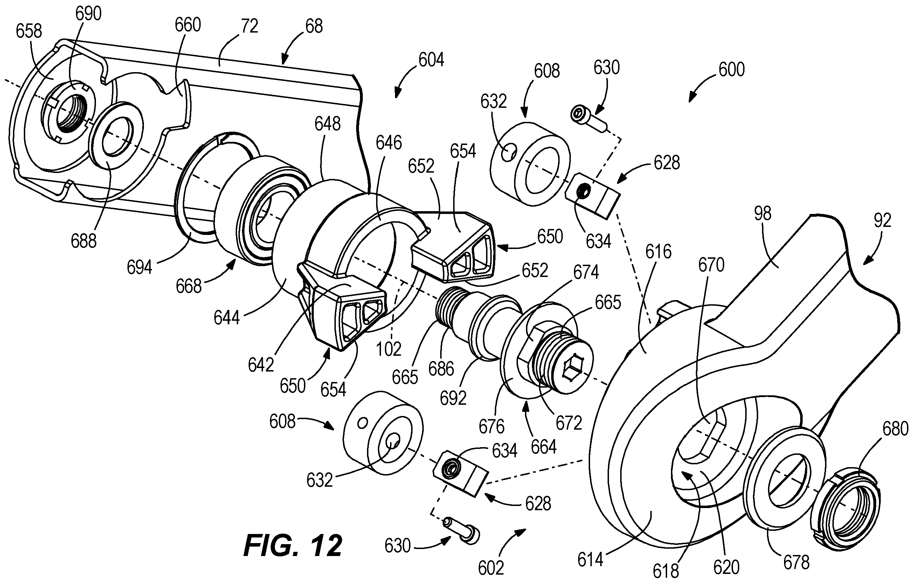

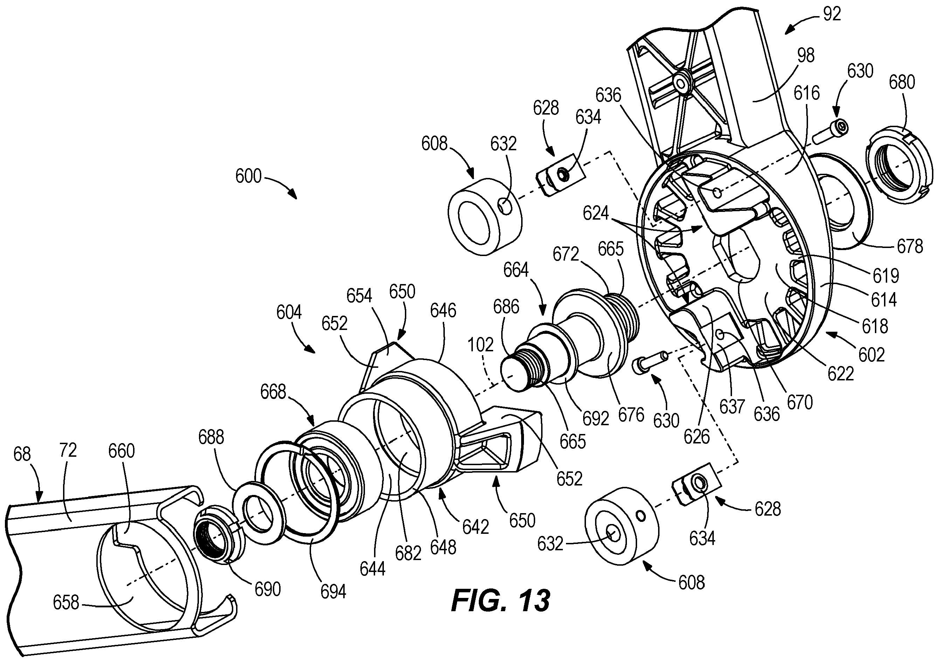

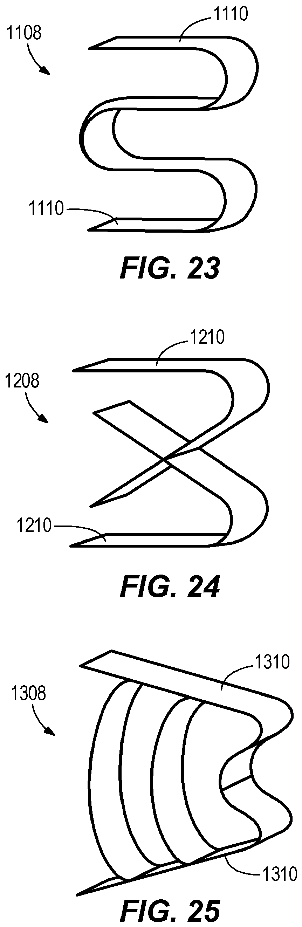

Referring to FIGS. 11- 13, in the illustrated embodiments, the first hub 602 is positioned at the lower end portion 98 of the rocker arm 92 and includes a first hub body 614 with a generally cylindrical side wall 616 formed around a mounting surface 618 with an outer face 620 (FIG. 12) and an opposite inner face 622 (FIG. 13). Internal ribs 619 extend radially inward from the inner surface of the side walls 616 to the mounting surface 618. Support members 624 are connected to the side walls 616 and project outward from the inner face 622 of the mounting surface 618. Each support member 624 includes a supporting surface 626 configured to support a dampener 608. The illustrated dampeners 608 are each configured as a resilient bumper that functions as a spring and has a generally annular shape and dampens pivoting movement of the pedal member 68 and the rocker arm 92 at a first end 610 and/or a second end 612 of the OAR 606. In some embodiments, at least one resilient bumper may be configured with a different shape, as illustrated in FIGS. 23-25. The resilient bumpers may be formed from an elastomeric material, such as a rubber. As will be described below in reference to FIGS. 14-16, the annular shape of the dampener is configured to be engaged by the second hub 604 as the pedal member 68 is pivoted towards the first end 610 and/or the second end 612 of the OAR 606.

Each dampener 608 is coupled to the supporting surface 626 of a corresponding support member 624 with a clip 628 and a fastener 630. The illustrated clip 628 is generally U-shaped and slides over the annular wall of the dampener 608 such that the ends of the clip 628 bracket the annular wall and a hole 632 formed in the dampener 608 is aligned with holes 634 in the ends of the clip 628. Other embodiments, however, may include a clip 628 with a different shape and/or size than those of the illustrated embodiments. Each fastener 630 extends through a hole 636 in the corresponding supporting surface 626 and holes 632, 634 in the dampener 608 and clip 628, thereby coupling the dampener 608 to the supporting surface 626. As best illustrated in FIG. 33, a slot 637 formed in each supporting surface 626 is configured to receive a portion of the clip 628 to restrict rotation of the dampeners 608 about the corresponding fastener 630. Some embodiments, however, may be configured with a different arrangement for coupling the dampeners 608 to the supporting surfaces 626.

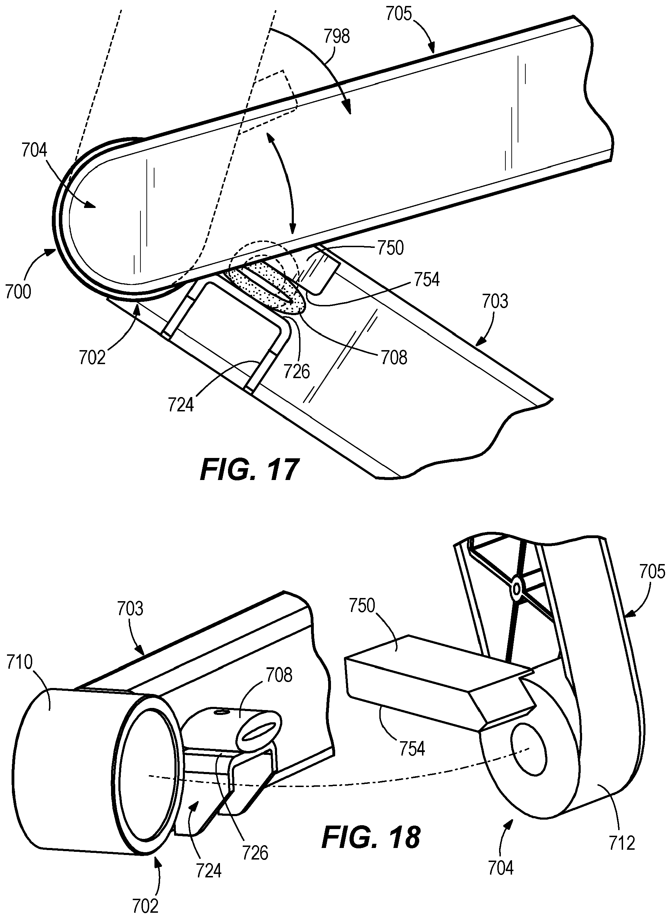

In the embodiments of FIGS. 11-16, the pivot device 600 is configured with two dampeners 608 arranged around the pivot axis 102 such that the first and second dampeners 608 are diametrically opposed relative to the pivot axis 102. However, as will be discussed below with respect to FIGS. 17-20 and 32, some embodiments may be configured with a different number of dampeners 608.

With continued reference to FIGS. 12 and 13, the second hub 604 includes a second hub body 642 positioned at the front portion 72 of the pedal member 68. The second hub body 642 has a generally hollow tubular portion 644 that extends axially along the pivot axis 102 from an interior end 646 to an opposite exterior end 648. Engagement protrusions 650 extend radially outward from the interior end 646 of the tubular portion 644. Each engagement protrusion 650 is generally wedge shaped and has side walls 652 that are angled towards the pivot axis 102. At least one of the side walls 652 of each engagement protrusion is configured as an engagement surface 654 that engages the dampener 608 at the first end 610 and/or the second end 612 of the OAR 606, as will be discussed in reference to FIGS. 14-16.

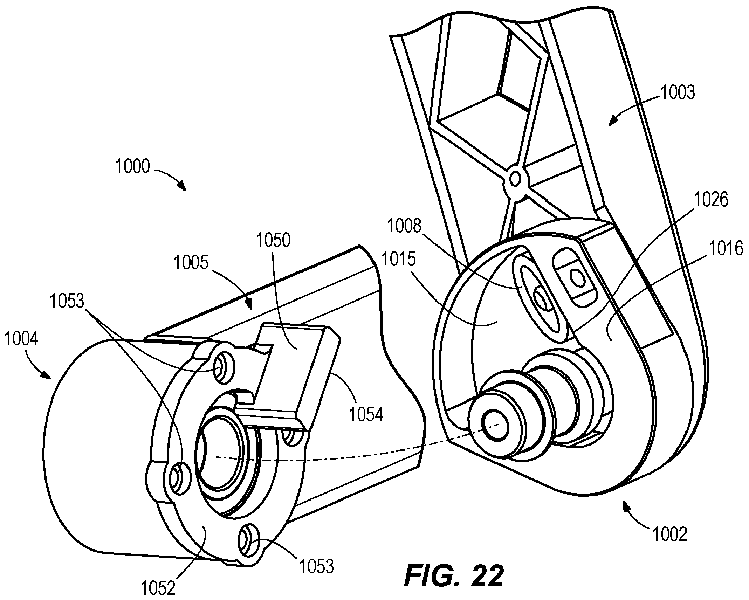

In the illustrated embodiments, the second hub body 642 is a separate member that is received in and secured to the pedal member 68. For example, the second hub body 642 may be coupled to the pedal members by at least one weld and/or at least one mechanical fastener. As illustrated in FIG. 22, the front portion 72 of the pedal member 68 includes a cutout 658 configured to receive the tubular portion 644 of the second hub body 642 and a slot 660 is configured to receive one of the engagement protrusions 650 extending from the tubular portion 644. Engagement between the slot 660 and the engagement protrusion 650 prevents rotation of the second hub body 642 with respect to the pedal member 68 and assists with positioning the second hub 604 prior to attachment to the pedal member 68. Some embodiments, however, may be differently configured. For example, some embodiments of a pivot device 600 may be configured with a second hub body 642 that is integrally formed with the pedal member 68, or the second hub 604 may be secured to a different part of the pedal member 68.

The first hub 602 is rotatably coupled to the second hub 604 with a shaft 664 with threaded portions 665 and a bearing 668. The illustrated bearing 668 is configured as a self-aligning bearing, but some embodiments may include a different type of bearing. Referring to FIGS. 12 and 13, an opening 670 formed through the mounting surface 618 of the first hub body 614 is positioned in alignment with the pivot axis 102 and is configured to receive a first end 672 of the shaft 664. The opening 670 is generally stadium shaped (i.e., elongated with semicircular ends and a rectangular body) and has flat sides that correspond to flat surfaces 674 on the first end 672 of the shaft 664. When assembled, the mounting surface 618 is clamped between a first flange 676 formed around the shaft 664 and a washer 678 and lock nut 680. Abutment between the flat surfaces 674 of the shaft 664 and the flat sides of the opening 670 prevent the shaft 664 from rotating with respect to the first hub 602 and the rocker arm 92.

With continued reference to FIGS. 12 and 13, the second hub 604 is coupled to the shaft 664 via the bearing 668. The bearing 668 is received in the tubular portion 644 via an opening at the exterior end 648 thereof and abuts an annular rim 682 formed around the interior surface of the tubular portion 644. The second end 686 of the shaft 664 extends into the second hub body 642 via the interior end 646 of the tubular portion 644 and through the center opening of the bearing 668. A washer 688 and a lock nut 690 couple the bearing 668 to the shaft 664 by clamping the bearing 668 between the washer 688 and lock nut 690 and a second flange 692 formed around the second end 686 of the shaft 664, thereby pivotably coupling the first hub 602 and the rocker arm 92 to the second hub 604 and the pedal member 68. The first flange 676 and the second flange 692 are spaced axially apart from each other on the shaft 664 to provide clearance for at least one of the dampeners 608, the support members 624, the engagement protrusions, and/or any other component of the pivot device 600. Some embodiments may include a retention ring 694 configured to retain the bearing 668 in the tubular portion 644 and/or the second hub body 642 in the cutout 658 of the pedal member 68.

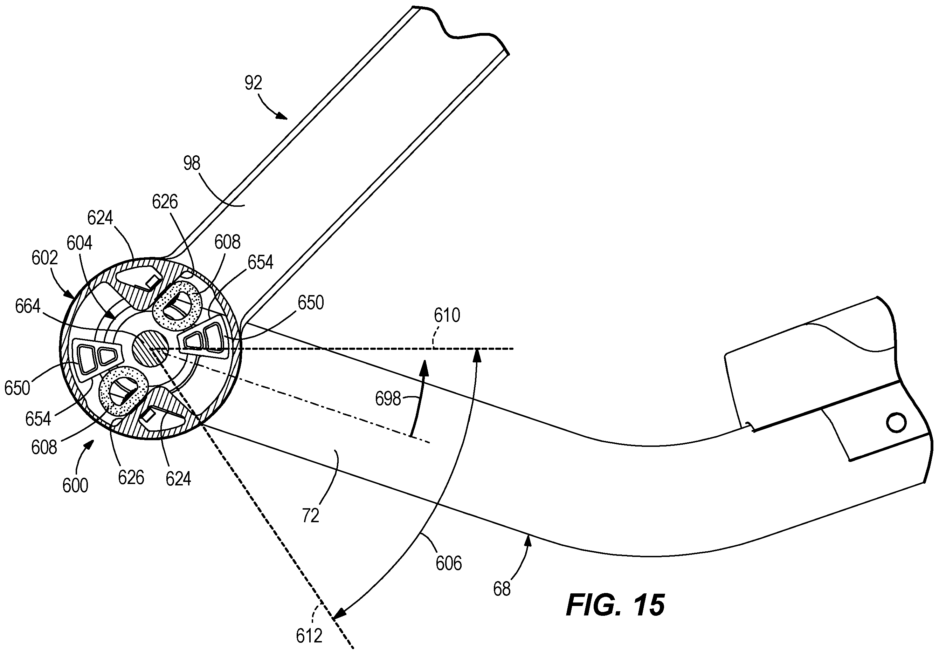

Referring now to FIGS. 14-16, the dampeners 608 (e.g., resilient bumpers) of the pivot device 600 are configured to dampen pivoting movement of the rocker arm 92 (i.e., a first movable member) relative to the pedal member 68 (i.e., a second movable member) as the pedal member 68 approaches the first end 610 of the OAR 606. In the illustrated embodiments, the OAR 606 is approximately 60 degrees. Some embodiments, however, may have a different pivot range that is larger than 60 degrees or smaller than 60 degrees. For example, an embodiment may be configured with an OAR 606 that is approximately 40 degrees. FIG. 14 depicts an embodiment of the pivot device 600 with the pedal member 68 at the second end 612 of the OAR 606. As the pedal member 68 pivots about the pivot axis 102 in the direction of arrow 698, the diametrically opposed engagement protrusions 650 on the second hub 604 of the pedal member 68 pivot about the pivot axis 102 and move towards a corresponding one of the diametrically opposed dampeners 608. Rotation of the pedal member 68 in the direction of arrow 698 brings the engagement surfaces 654 of the engagement protrusions 650 into contact with the dampeners 608, as illustrated in FIG. 15.

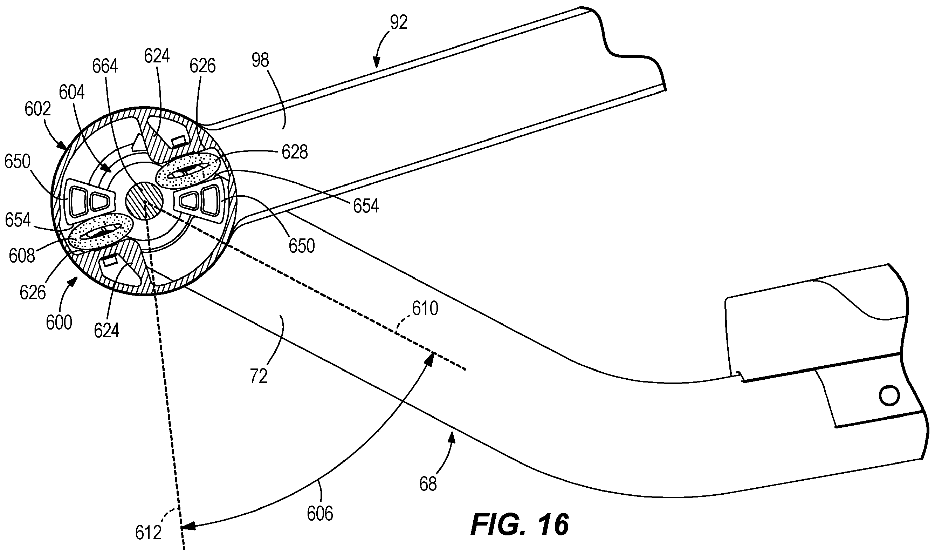

Continued rotation of the pedal member 68 towards the first end 610 of the OAR 606 causes the engagement surfaces 654 to push against and compress the dampeners 608, thereby compressing the annular shape of the dampeners 608 relative to the respective supporting surface 626. As they are compressed, the resiliently deformable dampeners 608 produce a dampening force that resists continued rotation of the pedal member 68 in the direction of arrow 698. The dampeners 608 continue to deform until the pedal member 68 reaches the first end 610 of the OAR 606, which is depicted in FIG. 16. When the pedal member 68 is pivoted to the first end 610 of the OAR 606, the engagement surfaces 654 of the protrusions 650 are brought into a position which is substantially parallel to the corresponding supporting surfaces 626 that supports the compressed dampener 608. As a result of the parallel positioning of the engagement surfaces 654 relative to the supporting surfaces 626, the dampening force produced by the compressed dampeners 608 is normal to both the engagement surfaces 654 and the supporting surfaces 626. This may be useful, for example, to increase the dampening efficiency by reducing the lateral component of the dampening force (i.e., the component of the dampening force that is parallel to the engagement and supporting surfaces), thereby increasing the stability of the exercise machine 20. Some embodiments may be configured such that at least one of the engagement surfaces 654 of the engagement protrusions 650 is not parallel to the corresponding the supporting surfaces 626 at the first end 610 of the OAR 606.

In the illustrated embodiments, the first hub 602 is positioned at the lower end portion 98 of the rocker arm 92 and the second hub 604 is positioned at the front portion 72 of the pedal member 68. Some embodiments, however, may be differently configured. For example, some embodiments may be configured with the first hub 602 positioned at the front portion 72 of the pedal member 68 and the second hub 604 positioned at the lower end portion 98 of the rocker arm 92. Some embodiments may be configured with a first and/or second hub 602, 604 that include a dampener 608 and an engagement surface 654. For example, a first hub may include a first dampener configured to be compressed by the second hub, and the second hub may include a second dampener configured to be compressed by the first hub.

In the illustrated embodiments, the first and second dampeners 608 are both configured to be compressed as the pedal member 68 moves towards the first end 610 of the OAR 606. Some embodiments, however, may be configured with at least one dampener 608 configured to dampen pivoting movement of the pedal member 68 as it pivots towards the second end 612 of the OAR 606. For example, a pivot device may be configured with a first dampener arranged such that it is compressed and dampens pivoting movement of the pedal member as the pedal member moves towards the first end of the OAR and a second dampener arranged so that it is compressed and dampens pivoting movement of the pedal member in the direction of the second end of the OAR. Additionally or alternatively, some embodiments of a pivot device may include at least one additional dampener configured to dampen pivoting movement towards the first end 610 and/or the second end 612 of the OAR 606. Further still, some embodiments may include at least one dampener that configured to dampen pivoting movement of the pedal member towards both the first end 610 and the second end 612 of the OAR 606.

In the example of FIGS. 14-16, the OAR 606 is depicted as a range or rotational movement of the pedal member 68 relative to the rocker arm 92 that is fixed relative to the rocker arm 92. However, it should be appreciated that both the pedal member 68 and the rocker arm 92 are pivotable relative to each other and the OAR 606 may be depicted as being fixed relative to another reference point. In such an embodiment, the rocker arm 92 and the pedal member 68 may be pivoted towards each other such that the pedal member 68 and the rocker arm 92 meet between the first and second ends of an OAR that is fixed relative to another reference point.

As previously mentioned, some embodiments of a pivot device may be configured with a different number of dampeners than the embodiments of FIGS. 11-16. For example, FIGS. 17 and 18 illustrate an embodiment of a pivot device 700 that includes one dampener 708. The pivot device 700 includes a first portion 702 on a first movable member 703 (e.g., a first one of the pedal member 68 and the rocker arm 92) and a second portion 704 on a second movable member 705 (e.g., the second one of the pedal member 68 and the rocker arm 92). The first portion 702 and the second portion 704 of the pivot device 700 are rotatably coupled to each other at a first hub 710 and second hub 712, respectively, such that the hubs 710, 712 define a pivot axis about which the first and second movable members 703, 705 pivot.

With continued reference to FIGS. 17 and 18, the first portion 702 of the pivot device 700 includes a support bracket 724 formed on the first movable member 703 adjacent the body of the first hub 710. The illustrated support bracket 724 is generally U-shaped and includes a supporting surface 726 that supports a resiliently deformable dampener 708, which may be coupled thereto similarly to the embodiments of FIGS. 11-16. The second portion 704 of the pivot device 700 includes an engagement protrusion 750 that extends from the body of the second hub 712. The illustrated engagement protrusion 750 is generally rectangular and includes an engagement surface 754 configured to engage and compress the dampener 708 as the second movable member 705 is pivoted in the direction of arrow 798 (FIG. 17) towards the first end of the OAR, thereby dampening movement of the first movable member 703 relative to the second movable member 705. As with the embodiments of FIGS. 11-16, at least one of the supporting surfaces 726 and the engagement surfaces 754 are offset from the pivot axis so that the supporting surfaces 726 and the respective engagement surfaces 754 are parallel to each other when the second member reaches the first end of the OAR, as illustrated in FIG. 17. Some embodiments may be configured with a support bracket and/or an engagement protrusion that are differently shaped and/or sized than those of the illustrated embodiments.

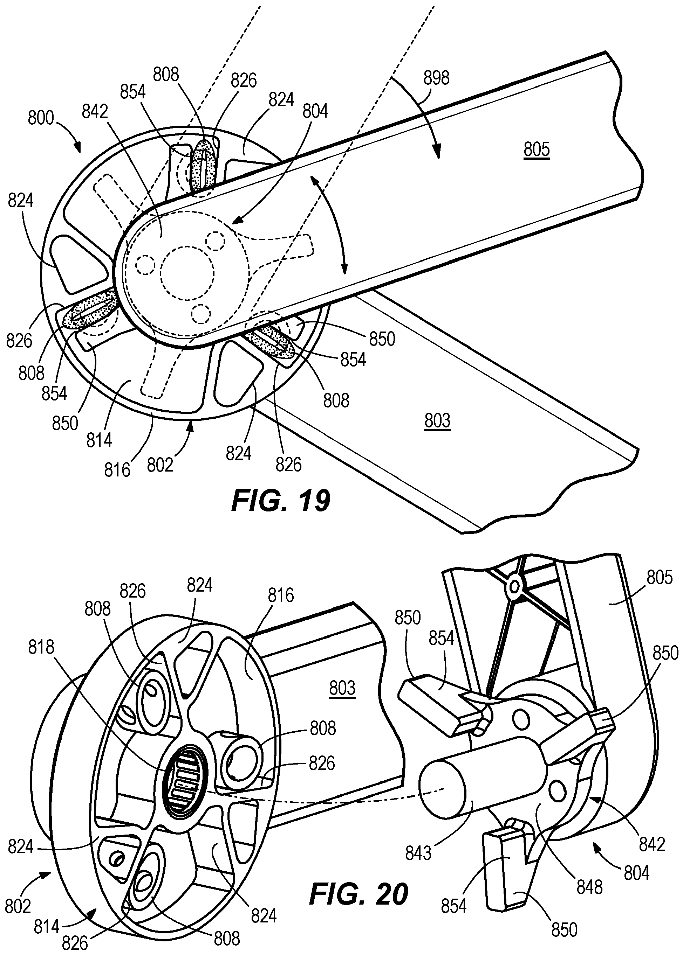

FIGS. 19 and 20 illustrate another embodiment of a pivot device 800 which includes three dampeners 808. The pivot device 800 includes a first portion 802 on a first movable member 803 (e.g., a first one of the pedal member 68 and the rocker arm 92) and a second portion 804 on a second movable member 805 (e.g., the second one of the pedal member 68 and the rocker arm 92). The first portion 802 of the pivot device 800 includes a first hub body 814 with a cylindrical side wall 816 formed around a centrally positioned through bore 818 that defines the pivot axis of the pivot device 800. Three support members 824 are spaced around the through bore 818. Each support member 824 extends radially between three through bore 818 and the side wall 816 and includes a supporting surface 826 configured to support one of the dampeners 808.

The second portion 804 of the pivot device 800 includes a second hub body 842 that is generally cylindrical and includes a shaft 843 that projects from an interior surface 848 of the second hub body 842 towards the first portion 802. The shaft 843 is configured to be received in the through bore 818 of the first portion 802, thereby pivotably coupling the first portion 802 and the movable member 803 to the second portion 804 and the second movable member 805. The second portion 804 includes three engagement protrusions 850, each one corresponding to one of the support members 824, that extend radially outward from the second hub body 842 on the interior surface 848 thereof. When the second movable member 805 is pivoted in the direction of arrow 898 (FIG. 19) towards the first end of the OAR, an engagement surface 854 of each engagement protrusion 850 is configured to engage and compress a corresponding one of the dampeners 808, thereby dampening movement of the first movable member 803 relative to the second movable member 805. As with the embodiments of FIGS 11-16 and 17-18, at least one of the supporting surfaces 826 and the engagement surfaces 854 are offset from the pivot axis so that the supporting surfaces 826 and the respective engagement surfaces 854 are parallel to each other when the second member reaches the first end of the OAR, as illustrated in FIG. 19. In the illustrated embodiments, the engagement protrusions 850 are generally rectangular. Some embodiments, however, may include at least one engagement protrusion that is differently shaped and/or sized than those of the illustrated embodiments.

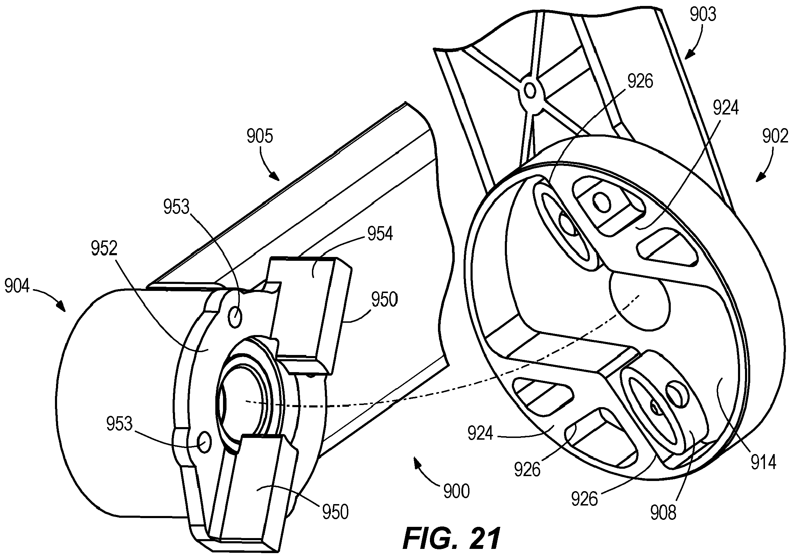

Referring to FIG. 21, another embodiment of a pivot device 900 is illustrated. Similarly to the embodiments of FIGS 11-16, the pivot device 900 includes two diametrically opposed dampeners 908 supported on supporting surfaces 926 of the support members 924 of the first portion 902. The body 952 of the second portion 904 of the pivot device 900 includes mounting openings 953 configured to receive a fastener (not shown) to secure the body 952 to the second movable member 905. Two engagement protrusions 950 are similar to those of FIGS. 19 and 20, and extend into the body 914 first portion 902 of the pivot device 900. When the first portion 902 and the second portion 904 of the pivot device 900 are rotated relative to each other towards the first end of the OAR, an engagement surface 954 of each engagement protrusion 950 is configured to engage and compress a corresponding one of the dampeners 908, thereby dampening movement of the first movable member 903 relative to the second movable member 905. In the illustrated embodiments, the engagement protrusions 950 are generally rectangular. Some embodiments, however, may include at least one engagement protrusion that is differently shaped and/or sized than those of the illustrated embodiments.

FIG. 32 illustrates another embodiment of a pivot device 1000 including one dampener 1008. The first portion 1002 of the pivot device 1000 includes a recessed cutout 1015 in which the dampener 1008 is positioned. The dampener 1008 is coupled to a supporting surface 1026 at a side wall 1016 of the first portion 1002. As with the embodiment of FIG. 11, an engagement protrusion 1050 extends from the body 1052 of the second portion 1004 of the pivot device. The body 1052 of the second portion 1004 of the pivot device 1000 includes mounting openings 1053 configured to receive a fastener (not shown) to secure the body 1052 to the second movable member 1005. As the first portion 1002 and the second portion 1004 are rotated relative to each other towards the first end of the OAR, an engagement surface 1054 of the engagement protrusion 1050 is configured to engage and compress a corresponding the dampener 1008, thereby dampening movement of the first movable member 1003 relative to the second movable member 1005. In the illustrated embodiments, the engagement protrusions 1050 are generally rectangular. Some embodiments, however, may include at least one engagement protrusion that is differently shaped and/or sized than those of the illustrated embodiments.

In the embodiments of FIGS. 11-12, the pivot devices 600, 700, 800, 900, 1000 are depicted in use with a personal exercise machine configured for performing a striding exercise motion. Some embodiments, however, may be configured for use with a different type of exercise machine including pivoting components. For example, and embodiment of a pivot device 600, 700, 800, 900, 1000 may be configured for use with a strength training exercise machine and/or a cardio training exercise machine.

As previously mentioned, some embodiments of a pivot device, such as the pivot devices 600, 700, 800, 900, 1000 of FIGS. 11-12, may be configured with a dampener that does not have an annular shape. For example, FIGS.23-25 show embodiments of a dampener 1108, 1208, 1308 that do not have an annular shape. Each of the dampeners 1108, 1208, 1308 has two opposing mounting surfaces 1110, 1210, 1310 that may be coupled to the supporting surface of a corresponding support member. As a dampener 1108, 1208, 1308 is compressed between a supporting surface and an engagement surface, the shape of said dampener 1108, 1208, 1308 deforms as the opposing mounting surfaces 1110, 1210, 1310 of the dampener 1108, 1208, 1308 are pressed together. The dampeners 1108, 1208, 1308 may be formed from a resiliently deformable material so that the dampeners 1108, 1208, 1308 return to their original shape once the compressive force is released.

Although specific advantages have been enumerated above, various examples may include some, none, or all of the enumerated advantages. Other technical advantages may become readily apparent to one of ordinary skill in the art after review of the following figures and description. Modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. For example, as stated above, the number and configuration of dampeners may vary. Further, the extent of the OAR may vary from what is shown, and for example may be smaller in an embodiment having more relatively more dampeners than an embodiment having relatively fewer dampeners. Or vice versa. In some examples, a single dampener may be advantageous over arrangement having multiple dampeners when the OAR is larger. The number of dampeners may be intentionally selected and designed based on the extent of the OAR of the particular machine. Additionally, steps may be performed in any suitable order. As used in this document, "each" refers to each member of a set or each member of a subset of a set.

The following clauses set out features of the invention which may not be presently claimed but which may form the basis for amendments or future divisional applications.

### CLAUSES

1. Exercise equipment for performing a striding exercise motion, the exercise equipment comprising:
   a frame,
   a rocker arm which is pivotably coupled to the frame,
   a pedal member which pivots with the rocker arm relative to the frame, and
   a pivot device which pivotably couples the pedal member to the rocker arm, wherein the pivot device comprises a dampener configured to dampen pivoting movement of the pedal member relative to the rocker arm.
2. The exercise equipment according to clause 1, wherein the pedal member is pivotable relative to the rocker arm through a pivot range, and wherein the dampener comprises a resilient bumper which dampens said pivoting movement at a first end of said pivot range.
3. The exercise equipment according to clause 2, wherein the resilient bumper has an annular shape which is compressed when the pedal member is pivoted towards the first end of said pivot range.
4. The exercise equipment according to clause 2, wherein the resilient bumper is coupled to a first one of the rocker arm and the pedal member, and wherein a second one of the rocker arm and the pedal member engages the resilient bumper when the pedal member is pivoted towards the first end of said pivot range.
5. The exercise equipment according to clause 4, wherein the second one of the rocker arm and the pedal member comprises an engagement surface which engages the resilient bumper as the pedal member is pivoted towards the first end of said pivot range.
6. The exercise equipment according to clause 5, wherein the resilient bumper is coupled to a supporting surface on the first one of the rocker arm and the pedal member, wherein the resilient bumper has an annular shape which is compressed relative to the supporting surface when the pedal member is pivoted towards the first end of said pivot range.
7. The exercise equipment according to clause 6, wherein the second one of the rocker arm and the pedal member comprises an engagement surface which engages the resilient bumper and compresses the annular shape when the pedal member is pivoted towards the first end of said pivot range.
8. The exercise equipment according to clause 7, wherein the engagement surface is brought into a position which is substantially parallel to the supporting surface when the pedal member is pivoted to the first end of said pivot range.
9. The exercise equipment according to clause 4, wherein the resilient bumper is a first resilient bumper, and further comprising a second resilient bumper.
10. The exercise equipment according to clause 9, wherein the second resilient bumper is engaged at the first end of said pivot range.
11. The exercise equipment according to clause 9, wherein the second resilient bumper is engaged at a second end of said pivot range.
12. The exercise equipment according to clause 9, wherein the pivot device defines a pivot axis about which the pedal member is pivotable relative to the rocker arm, and wherein the first resilient bumper and the second resilient bumper are diametrically opposed relative to the pivot axis.
13. The exercise equipment according to clause 9, further comprising a first engagement surface which engages the first resilient bumper as the pedal member is pivoted towards the first end of said pivot range and a second engagement surface which engages the second resilient bumper as the pedal member is pivoted towards the first end of said pivot range or a second end of said pivot range.
14. The exercise equipment according to clause 13, wherein the first resilient bumper is coupled to a first supporting surface, wherein the first resilient bumper has an annular shape which is compressed relative to the first supporting surface when the pedal member is pivoted towards the first end of said pivot range, and further wherein the second resilient bumper is coupled to a second supporting surface, and wherein the second resilient bumper has an annular shape which is compressed relative to the second supporting surface when the pedal member is pivoted towards the first end of said pivot range or the second end of said pivot range.
15. The exercise equipment according to clause 14, further comprising a first engagement surface which engages and compresses the annular shape of the first resilient bumper when the pedal member is pivoted towards the first end of said pivot range, and further comprising a second engagement surface which engages and compresses the annular shape of the second resilient bumper when the pedal member is pivoted towards the first end of said pivot range or the second end of said pivot range.
16. The exercise equipment according to clause 15, wherein the first engagement surface is brought into a position which is substantially parallel to the first supporting surface when the pedal member is pivoted to the first end of said pivot range, and further wherein the second engagement surface is brought into a position which is substantially parallel to the second supporting surface when the pedal member is pivoted to the first end of said pivot range or the second end of said pivot range.
17. The exercise equipment according to clause 16, wherein the pivot device defines a pivot axis about which the pedal member is pivotable relative to the rocker arm, and wherein the first resilient bumper and the second resilient bumper are diametrically opposed relative to the pivot axis.
18. A pivot device for exercise equipment, the pivot device comprising:
   a first hub for a first movable member of the exercise equipment;
   a second hub for a second movable member of the exercise equipment;
   wherein the first hub and the second hub are pivotable relative to each other about a pivot axis through a pivot range, thereby facilitating pivoting movement of the first movable member and second movable member relative to each other about the pivot axis through the pivot range; and
   a dampener configured to dampen said pivoting movement, wherein the dampener comprises a resilient bumper which dampens said pivoting movement at a first end of said pivot range, and wherein the resilient bumper is compressed when the second movable member is pivoted towards the first end of said pivot range, the resilient bumper optionally having an annular shape.
19. The pivot device according to clause 18, wherein the resilient bumper is coupled to the first hub and the second hub engages the resilient bumper at the first end of said pivot range.
20. The pivot device according to clause 19, wherein second hub comprises an engagement surface which engages the resilient bumper at the first end of said pivot range.
21. The pivot device according to clause 20 wherein the resilient bumper is coupled to a supporting surface, wherein the resilient bumper is compressed relative to the supporting surface at the first end of said pivot range.
22. The pivot device according to clause 21, wherein the engagement surface is brought into a position which is substantially parallel to the supporting surface at the first end of said pivot range.
23. The pivot device according to any one of clauses 18-22, wherein the resilient bumper is a first resilient bumper, and further comprising a second resilient bumper.
24. The pivot device according to clause 23, wherein the second resilient bumper is engaged at the first end of said pivot range.
25. The pivot device according to clause 23, wherein the second resilient bumper is engaged at a second end of said pivot range.
26. The pivot device according to any one of clauses 23-25, wherein the pivot device defines a pivot axis, and wherein the first resilient bumper and the second resilient bumper are diametrically opposed relative to the pivot axis.
27. The pivot device according to any one of clauses 23-26 as dependent on clause 20, wherein the engagement surface is a first engagement surface, and wherein the pivot device further comprises a second engagement surface which engages the second resilient bumper at the first end of said pivot range or a second end of said pivot range.
28. The pivot device according to clause 27, wherein the first resilient bumper is coupled to a first supporting surface, wherein the first resilient bumper is compressed relative to the first supporting surface at the first end of said pivot range, and further wherein the second resilient bumper is coupled to a second supporting surface, and wherein the second resilient bumper is compressed relative to the second supporting surface at the first end of said pivot range or the second end of said pivot range, and further comprising
   a first engagement surface which engages and compresses the first resilient bumper during pivoting movement towards the first end of said pivot range, and further comprising a second engagement surface which engages and compresses the second resilient bumper during pivoting movement towards the first end of said pivot range or the second end of said pivot range; and
   wherein the first engagement surface is brought into a position which is substantially parallel to the first supporting surface at the first end of said pivot range, and further wherein the second engagement surface is brought into a position which is substantially parallel to the second supporting surface at the first end of said pivot range or the second end of said pivot range.

## Claims

1. Exercise equipment for performing a striding exercise motion, the exercise equipment comprising:
a frame,
a rocker arm which is pivotably coupled to the frame,
a pedal member which pivots with the rocker arm relative to the frame, and
a pivot device which pivotably couples the pedal member to the rocker arm,
wherein the pivot device comprises a dampener configured to dampen pivoting movement of the pedal member relative to the rocker arm.

2. The exercise equipment according to claim 1, wherein the pedal member is pivotable relative to the rocker arm through a pivot range, and wherein the dampener comprises a resilient bumper which dampens said pivoting movement at a first end of said pivot range.

3. The exercise equipment according to claim 2, wherein the resilient bumper has an annular shape which is compressed when the pedal member is pivoted towards the first end of said pivot range.

4. The exercise equipment according to claim 2 or 3, wherein the resilient bumper is coupled to a first one of the rocker arm and the pedal member, and wherein a second one of the rocker arm and the pedal member engages the resilient bumper when the pedal member is pivoted towards the first end of said pivot range.

5. The exercise equipment according to claim 4, wherein the second one of the rocker arm and the pedal member comprises an engagement surface which engages the resilient bumper as the pedal member is pivoted towards the first end of said pivot range.

6. The exercise equipment according to claim 5, wherein the resilient bumper is coupled to a supporting surface on the first one of the rocker arm and the pedal member, wherein the resilient bumper is compressed relative to the supporting surface when the pedal member is pivoted towards the first end of said pivot range.

7. The exercise equipment according to claim 6, wherein the engagement surface is brought into a position which is substantially parallel to the supporting surface when the pedal member is pivoted to the first end of said pivot range.

8. The exercise equipment according to any one of claims 2-7, wherein the resilient bumper is a first resilient bumper, and wherein the exercise equipment further comprises a second resilient bumper.

9. The exercise equipment according to claim 8, wherein the second resilient bumper is engaged at the first end of said pivot range.

10. The exercise equipment according to claim 8, wherein the second resilient bumper is engaged at a second end of said pivot range.

11. The exercise equipment according to claim 10, wherein the pivot device defines a pivot axis about which the pedal member is pivotable relative to the rocker arm, and wherein the first resilient bumper and the second resilient bumper are diametrically opposed relative to the pivot axis.

12. The exercise equipment according to any one of claims 8-11 as dependent on claim 5, wherein the engagement surface is a first engagement surface which engages the first resilient bumper as the pedal member is pivoted towards the first end of said pivot range, and wherein the exercise equipment further comprises a second engagement surface which engages the second resilient bumper as the pedal member is pivoted towards the first end of said pivot range or a second end of said pivot range.

13. The exercise equipment according to claim 12 as dependent on claim 6, wherein the supporting surface is a first supporting surface, and wherein the first resilient bumper is coupled to the first supporting surface, wherein the first resilient bumper is compressed relative to the first supporting surface when the pedal member is pivoted towards the first end of said pivot range, and further wherein the second resilient bumper is coupled to a second supporting surface, and wherein the second resilient bumper is compressed relative to the second supporting surface when the pedal member is pivoted towards the first end of said pivot range or the second end of said pivot range.

14. The exercise equipment according to claim 13 as dependent on claim 7, wherein the first engagement surface is brought into a position which is substantially parallel to the first supporting surface when the pedal member is pivoted to the first end of said pivot range, and further wherein the second engagement surface is brought into a position which is substantially parallel to the second supporting surface when the pedal member is pivoted to the first end of said pivot range or the second end of said pivot range
